# EUROPEAN PATENT SPECIFICATION

(11) **EP 2 202 509 B1**
(45) Date of publication and mention of the grant of the patent: **28.09.2011**
(21) Application number: 09176905.9
(22) Date of filing: 24.11.2009
(51) Int. Cl.: G01N 27/02, G01N 15/06

(54) **Particulate matter detection apparatus**
Vorrichtung zur Erkennung von Schwebstoffen
Appareil de détection de matières particulaires

(30) Priority: 24.12.2008 JP 2008328803
(43) Date of publication of application: 30.06.2010
(73) Proprietor: Honda Motor Co., Ltd., Tokyo 107-8556 (JP)
(72) Inventor: Miki, Masanobu, Saitama 351-0193 (JP); Okayama, Tatsuya, Saitama 351-0193 (JP); Iwama, Keizo, Saitama 351-0193 (JP); Ozawa, Hidetaka, Saitama 351-0193 (JP); Hattori, Makoto, Saitama 351-0193 (JP)
(74) Representative: Prechtel, Jörg

(56) References cited:
- EP-A1- 1 321 764
- DE-A1-102005 030 134
- DE-A1-102006 009 066
- US-A1- 2003 196 499
- US-A1- 2008 265 870

## Description

This application is based on and claims the benefit of priority from Japanese Patent Application No. 2008-328803, filed on 24 December 2008.

### BACKGROUND OF THE INVENTION

### Field of the Invention

The present invention relates to a particulate matter detection apparatus. Specifically, the present invention relates to a particulate matter detection apparatus that detects the concentration of particulate matter in exhaust gas emitted from an internal combustion engine.

### Related Art

According to the related art, a particulate matter detection apparatus that detects the concentration of particulate matter in exhaust gas has been provided in an exhaust pipe of an internal combustion engine. As this particulate matter detection apparatus, for example, Japanese Unexamined Patent Application Publication No. 2008-139294 discloses a particulate matter detection apparatus in which an electrode unit is provided in an exhaust pipe to detect the concentration of particulate matter in the exhaust gas in the exhaust pipe by causing particulate matter contained in exhaust gas to be deposited on this electrode unit, followed by measuring the electrical characteristic of the electrode unit on which particulate matter is deposited.

US 2008/265870 A1 discloses a particulate matter detection apparatus that has an electrode unit provided in an exhaust gas path of an internal combustion engine and that detects the concentration of particulate matter in exhaust gas based on an electrical characteristic of the electrode unit on which particulate matter contained in exhaust gas deposits, the particulate matter detection apparatus comprising: a temperature control means for controlling the temperature of particulate matter deposited on the electrode unit; and a concentration detection means for measuring the electrical characteristic of the electrode unit in a state in which the temperature of particulate matter deposited on the electrode unit is controlled by the temperature control means, and detecting the concentration of particulate matter in exhaust gas in accordance with the electrical characteristic thus measured. The electrode unit includes a two electrode structure containing a signal electrode and a detector electrode. A high voltage is applied to the signal electrode, so that particulate matter can be measured either by measuring the charge that accumulates the detector electrode, or by measuring an output voltage generated by the accumulated charge.

EP 1 271 764 A 1 shows an oxygen sensor driven by an AC signal between two measuring leads, and a sensor temperature is determined by measuring the resistance or potential difference.

US 2003/196499 A1 shows a particulate sensor comprising a heater and operated by measuring the resistance between the two sensor electrodes and further an AC method for detecting conductivity.

DE 10 2005 030 134 A1 shows a particular sensor comprising a heater, and determining the particulate concentration by detecting the conductivity between the sensor electrodes.

### SUMMARY OF THE INVENTION

However, particulate matter has a characteristic whereby an electrical property changes when temperature changes. Therefore, as described above, in a particulate matter detection apparatus that detects the concentration of particulate matter based on the measurement of an electrical characteristic of an electrode unit on which particulate matter is deposited, the detected value may change as the operating state of the internal combustion engine and the temperature of exhaust gas change.

The present invention was made by taking the above such issues into account, and an object thereof is to provide a particulate matter detection apparatus that detects the concentration of particulate matter in exhaust gas based on the measurement of an electrical characteristic of particulate matter, whereby the concentration is stably detected regardless of the operating state of an internal combustion engine and the temperature of exhaust gas.

In order to achieve the above-mentioned object, the present invention provides a particulate matter detection apparatus (1) in accordance with claim 1.

The apparatus has an electrode unit (2) provided in an exhaust gas path (EP) of an internal combustion engine and that detects the concentration of particulate matter in exhaust gas based on an electrical characteristic of the electrode unit on which particulate matter contained in exhaust gas deposits. The particulate matter detection apparatus includes: a temperature control means (5, 6, 8) for

controlling the temperature of particulate matter deposited on the electrode unit; and a concentration detection means (6) for measuring the electrical characteristic of the electrode unit in a state in which the temperature of particulate matter deposited on the electrode unit is controlled by the temperature control means to be within a stable temperature range in which an electrical property of particulate matter is stable, and detecting the concentration of particulate matter in exhaust gas in accordance with the electrical characteristic thus measured.

According to the present invention, the electrical characteristic of the electrode unit is measured in a state in which the temperature of particulate matter deposited on the electrode unit is controlled by the temperature control means to within a stable temperature range in which the electrical property of particulate matter is stable. Thus, the electrical characteristic of the electrode unit can be stably measured regardless of the operating state of the internal combustion engine and the temperature of exhaust gas. Therefore, the concentration of particulate matter in exhaust gas can be stably measured regardless of the operating state of the internal combustion engine and the temperature of exhaust gas.

In this case, it is preferable that the stable temperature range is equal to or more than 200°C.

According to the present invention, the electrical characteristic of the electrode unit is measured in a state in which the temperature of particulate matter deposited on the electrode unit is controlled by the temperature control means to be equal to or more than 200°C. Thus, the electrical characteristic of the electrode unit can be measured while the electrical property of particulate matter deposited on the electrode unit is more reliably stabilized. Therefore, the concentration of particulate matter in exhaust gas can be more stably measured.

In this case, it is preferable that the temperature control means includes a parameter detection means (5, 6, 8) for detecting a parameter (T) that has a correlation with the temperature of particulate matter deposited on the electrode unit, and a heating means (5,6) for heating the electrode unit in accordance with the parameter detected by the parameter detection means.

According to the present invention, a parameter having a correlation with the temperature of particulate matter deposited on the electrode unit is detected, and the electrode unit is heated in accordance with the parameter thus detected. Thus, the temperature of particulate matter deposited on the electrode unit can be more reliably controlled to within a stable temperature range. Therefore, the concentration of particulate matter in exhaust gas can be more stably measured.

In this case, it is preferable that the heating means determines whether or not a parameter detected by the parameter detection means is within a stable parameter range set to correspond to the stable temperature range, based on the correlation, and does not heat the electrode unit in a case where the parameter thus detected is within the stable parameter range, and heats the electrode unit in a case where the parameter thus detected is not within the stable parameter range.

According to the present invention, the heating means determines whether or not the parameter detected by the parameter detection means is within a stable parameter range set to correspond to the stable temperature range. Then, in a case where it is determined that the parameter is within the stable parameter range, the electrode unit is not heated, and in a case where it is determined that the detected parameter is not within the stable parameter range, the electrode unit is heated. Thus, excess electric power consumption for heating the electrode unit can be suppressed while the temperature of particulate matter deposited on the electrode unit is controlled to within the stable temperature range.

In this case, it is preferable that the concentration detection means measures the electrical characteristic of the electrode unit after causing particulate matter contained in exhaust gas to be deposited on the electrode unit by applying a predetermined voltage to the electrode unit, and detects the concentration of particulate matter in exhaust gas in accordance with the electrical characteristic thus measured.

According to the present invention, the concentration detection means measures the electrical characteristic of the electrode unit after causing particulate matter to be deposited on the electrode unit by applying a predetermined voltage to the electrode unit, and detects the concentration of particulate matter in exhaust gas in accordance with the electrical characteristic thus measured. In fact, since this particulate matter detection apparatus needs to perform the following two steps: a step of causing particulate matter to deposit on the electrode unit and a step of measuring the electrical characteristic of the electrode unit, high accuracy detection is possible, but time is required to detect the concentration of particulate matter. Thus, as the operating state of the internal combustion engine changes while performing the two steps, the temperature of particulate matter deposited on the electrode unit changes, which may cause detection accuracy to be reduced as a result. Therefore, before measuring the electrical characteristic of the electrode unit as described above, controlling the temperature of particulate matter deposited on this electrode unit to be within the stable temperature range is especially effective in the detection device requiring time for such detection.

### BRIEF DESCRIPTION OF THE DRAWINGS

FIG. 1 is a pattern diagram illustrating the structure of the particulate matter (PM) sensor according to one embodiment of the present invention;
FIGs. 2A and 2B are perspective views illustrating the structure of the sensor electrode unit according to the above-mentioned embodiment;
FIG. 3 is a flow chart illustrating the process of detecting the PM concentration of exhaust gas by the PM sensor according to the above-mentioned embodiment;
FIG. 4 is a diagram illustrating the structure of an experimental apparatus for experimental acquisition of the electrical property according to the above-mentioned embodiment;
FIG. 5 is a diagram illustrating a resistance-temperature characteristic that is a measurement result from the above-mentioned experimentation;
FIG. 6 is a diagram illustrating a reactance-temperature characteristic that is a measurement result from the above-mentioned experimentation;
FIG. 7 is a diagram illustrating the structure of an experimental apparatus for experimental acquisition of a temperature characteristic according to the above-mentioned embodiment;
FIG. 8 is a diagram illustrating the result of the above-mentioned experimentation;
FIG. 9 is a diagram illustrating the result of the above-mentioned experimentation; and
FIG. 10 is a diagram illustrating the result of the above-mentioned experimentation.

### DETAILED DESCRIPTION OF THE INVENTION

One embodiment of the present invention will be explained hereinafter with reference to the drawings.

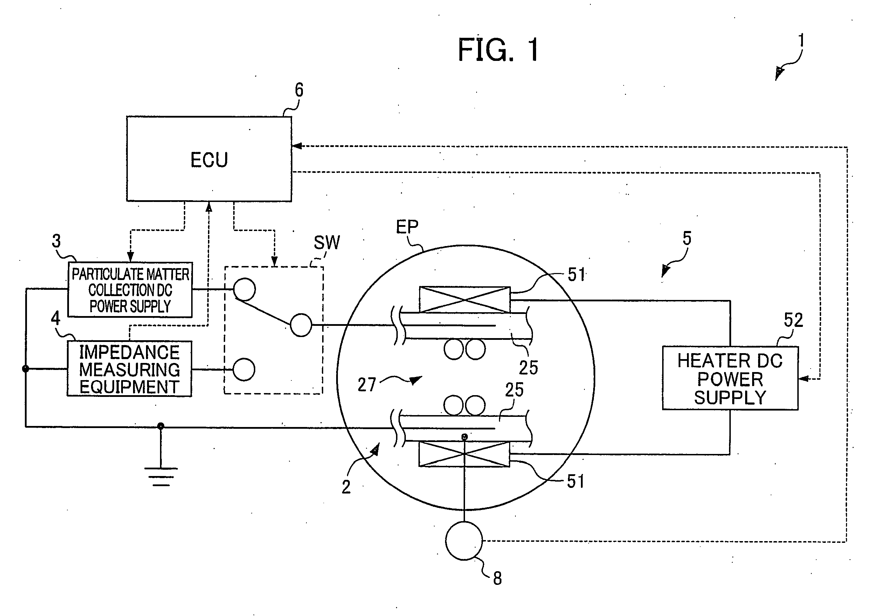

FIG. 1 is a pattern diagram illustrating the structure of the particulate matter detection apparatus (hereinafter referred to as "PM sensor") 1 according to the present embodiment.

The PM sensor 1 is configured to include a sensor electrode unit 2 provided in an exhaust pipe EP of an engine; a particulate matter collection DC power supply 3 and impedance measuring equipment 4, and a temperature control device 5 controlling the temperature of the sensor electrode unit 2, which are connected with this sensor electrode unit 2, and an electronic control unit (hereinafter referred to as "ECU") 6 performing control thereof. As described in detail below, the PM sensor 1 measures the electrical characteristic of the sensor electrode unit 2 on which particulate matter (hereinafter referred to as "PM") contained in exhaust gas flowing in the exhaust pipe EP is deposited, and then detects the concentration of particulate matter in exhaust gas flowing in the exhaust pipe EP, which is hereinafter referred to as "PM concentration", based on the electrical characteristic thus measured.

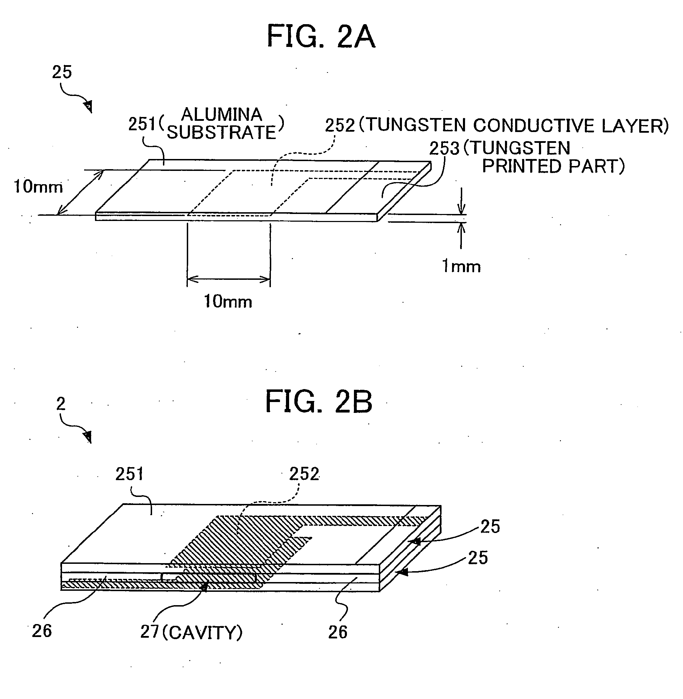

FIGs. 2A and 2B are diagrams illustrating the structure of the sensor electrode unit 2. More specifically, FIG. 2A is a perspective view illustrating the structure of an electrode plate 25 of the sensor electrode unit 2, and FIG. 2B is a perspective view illustrating the structure of the sensor electrode unit 2 configured to include the two electrode plates 25, 25.

As shown in FIG. 2A, the electrode plate 25 is provided with a substantially rectangular alumina substrate 251 and a tungsten conductive layer 252 formed on the surface of this alumina substrate 251. This tungsten conductive layer 252 is configured to include a conductive part formed in a substantially square shape at substantially the center part of the alumina substrate 251, and a conductive wire part extending from this conductive part to a first end side of the alumina substrate 251. In addition, at the first end side of the alumina substrate 251, a tungsten printed part 253 provided to be stacked on the conductive wire part of this tungsten conductive layer 252 is formed.

The thickness of the alumina substrate 251 is about 1 mm, and the length on a side of the conductive part of the tungsten conductive layer 252 is about 10 mm.

As shown in FIG. 2B, the sensor electrode unit 2 is configured by disposing plate-like spacers 26, 26 between a pair of electrode plates 25, 25 to be combined. These spacers 26, 26 are provided at both end sides of each electrode plate 25, and a cavity 27 in which PM is collected is, therefore, formed at the conductive part of the tungsten conductive layer 252 of each electrode plate 25.

Referring to FIG. 1 again, the PM collection DC power supply 3 and the impedance measuring equipment 4 are connected with the respective electrode plates 25, 25 of the sensor electrode unit 2 through a change-over switch SW.

The PM collection DC power supply 3 operates based on control signals transmitted from the ECU 6 to apply a predetermined voltage over the electrode plates 25, 25 of the sensor electrode unit 2 over a predetermined time. Accordingly, PM contained in the exhaust gas flowing in the exhaust pipe EP is deposited on the electrode plates 25, 25.

The impedance measuring equipment 4 operates based on control signals transmitted from the ECU 6 to detect the capacitance between the electrode plates 25, 25 of the sensor electrode unit 2 with an alternating current signal applied at a predetermined measured voltage over a predetermined measurement period, and then outputs a detection signal substantially proportional to the capacitance value thus detected to the ECU 6.

The change-over switch SW operates based on control signals transmitted from the ECU 6 to selectively switch connection of the electrode plate 25 between the PM collection DC power supply 3 and the impedance measuring equipment 4. As described in detail below, the PM collection DC power supply 3 is connected with the electrode plate 25 when performing a sampling process of collecting PM in the cavity 27 of the sensor electrode unit 2, and the impedance measuring equipment 4 is connected with the electrode plate 25 when performing the measurement process of measuring the capacitance of the sensor electrode unit 2.

The temperature control apparatus 5 is configured to include heaters 51, 51, which are provided in contact with respective electrode plates 25, 25, and a heater DC power supply 52 that supplies electric power to these heaters 51, 51.

The heater DC power supply 52 operates based on control signals transmitted from the ECU 6 and applies a predetermined electric current to the heaters 51, 51. The heaters 51, 51 generate heat when electric current is supplied from the heater DC power supply 52, and then heat the electrode plates 25, 25. Thus, the temperature of PM deposited on the sensor electrode unit 2 can be controlled. In addition, the sensor electrode unit 2 can be regenerated by heating the electrode plates 25, 25 to combust and remove PM deposited on the electrode plates 25, 25.

An electrode temperature sensor 8 is connected with the ECU 6. The electrode temperature sensor 8 detects the temperature of the electrode plate 25 as a parameter correlated with the temperature of PM deposited on the sensor electrode unit 2, and outputs a detection signal to the ECU 6.

Hereinafter, the relationship between the temperature of the electrode plate 25 and the temperature of PM deposited on this electrode plate 25 will be explained. The heat capacity of the electrode plate 25 is sufficiently higher than that of PM deposited on this electrode plate 25. Thus, the temperature of PM becomes nearly equal to the temperature of the electrode plate 25 even if PM, the temperature of which is different from that of the electrode plate 25, is deposited on this electrode plate 25. Therefore, the temperature of the electrode plate 25 is considered to be nearly equal to that of PM deposited on this electrode plate 25, hereinafter.

The ECU 6 is provided with an input circuit having functions such as shaping signal waveforms that are input from various kinds of sensors, correcting voltage levels into a predetermined level, and converting analog signal values into digital signal values, and a central processing unit (hereinafter referred to as "CPU"). Furthermore, the ECU 6 is provided with a memory circuit that stores various kinds of calculation programs to be executed by the CPU, calculation results and the like, and an output circuit that outputs control signals to the PM collection DC power supply 3, the impedance measuring equipment 4, the heater DC power supply 52, the change-over switch SW, etc.

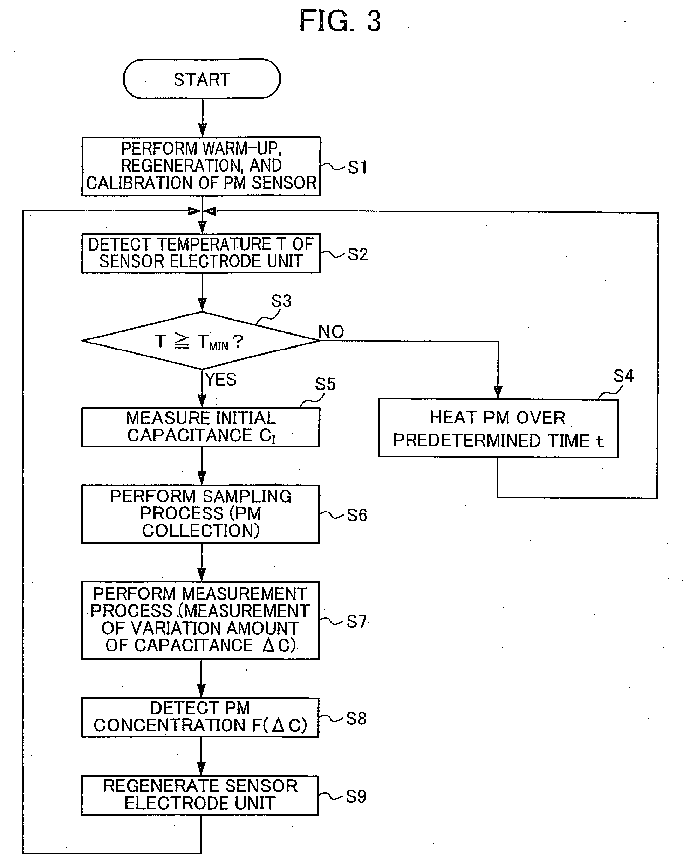

FIG. 3 is a flow chart illustrating the process of detecting the PM concentration of exhaust gas by the PM sensor 1. This flow chart is executed by the ECU 6 after the engine starts.

In Step S1, warm-up, regeneration, and calibration of the PM sensor are performed.

In Step S2, the temperature T of the sensor electrode unit is detected by the electrode temperature sensor.

In Step S3, it is determined whether or not the detected temperature T of the sensor electrode unit is within the stable electrode temperature range as set to a predetermined lower limit value T_{MIN}. In other words, it is determined whether or not the detected temperature T of the sensor electrode unit is equal to or more than the lower limit value T_{MIN}. In a case where this determination is "YES", the process proceeds to Step S5, and in a case where this determination is "NO", the process proceeds to Step S4.

Hereinafter, the stable electrode temperature range in relation to the temperature of the sensor electrode unit will be explained.

Generally, the electrical property of PM deposited on the sensor electrode unit varies with the temperature of PM. However, as described in detail below, in a case where the temperature of PM is within a predetermined stable PM temperature range, the electrical property of PM is stable regardless of the temperature of PM.

Then, the above-mentioned stable electrode temperature range represents the temperature range of the sensor electrode unit as set corresponding to this stable PM temperature range. In other words, the stable electrode temperature range represents the temperature range of the sensor electrode unit in which the electrical property of the PM thus deposited is considered to be stable when PM is deposited on the sensor electrode unit.

In addition, since the temperature of PM deposited on the sensor electrode unit is can be considered to be nearly equal to the temperature of the electrode plates of the sensor electrode unit as described above, the stable PM temperature range and the stable electrode temperature range can be considered to represent the same temperature range.

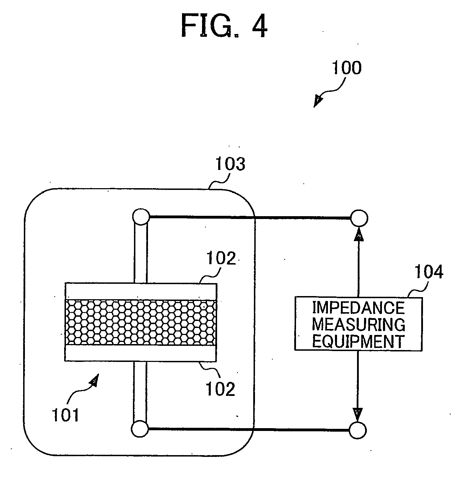

In the present embodiment, for example, this stable PM temperature range, namely the stable electrode temperature range, is set to be equal to or more than 200°C based on the experimental acquisition of electrical property as described below with reference to FIGs. 4 to 6.

In Step S4, the sensor electrode unit is heated by the heaters over a predetermined time t in response to the determination that the detected temperature T of the sensor electrode unit is not within the stable electrode temperature range, and then the process returns to Step S2. This heating time t is set so that the temperature of the sensor electrode unit after heating is within the above-mentioned stable electrode temperature range. In addition, it is preferable that this heating time t is set so that the temperature of the sensor electrode unit after heating is within the stable electrode temperature range and does not exceed a predetermined combustion initiation temperature T_{MAX}. Hereinafter, the combustion initiation temperature T_{MAX} represents a temperature when the combustion of PM is initiated.

In Step S5, the capacitance of the sensor electrode unit is measured and then recorded as an initial capacitance C_{I}.

In Step S6, the sampling process is performed over a predetermined time. More specifically, in this sampling process, PM contained in exhaust gas is caused to deposit on the sensor electrode unit by applying a voltage to the sensor electrode unit over a predetermined time.

At this point, as described above, in a case where the temperature of the sensor electrode unit is not within the stable electrode temperature range, the sensor electrode unit is heated to allow the temperature of the sensor electrode unit to be within the above-mentioned stable electrode temperature range, so that the temperature of PM deposited on the sensor electrode unit can be controlled to be within the stable PM temperature range.

In Step S7, a variation amount of capacitance ΔC is measured as the electrical characteristic of the sensor electrode unit. More specifically, in Step S7, the capacitance of the sensor electrode unit is measured and recorded as a post-PM collection capacitance C_{F}. Next, the variation amount of capacitance AC (=C_{F}-C_{I}) is calculated by subtracting the above-mentioned initial capacitance C_{I} from this post-PM collection capacitance C_{F}, and then recorded. In other words, the variation amount of capacitance ΔC represents the variation amount between the capacitances of the sensor electrode unit before and after PM is collected in the sensor electrode unit.

In Step S8, the PM concentration of exhaust gas is detected in accordance with the variation amount of capacitance ΔC thus measured. More specifically, in Step S8, the PM concentration F corresponding to the variation amount of capacitance ΔC thus measured is calculated based on a control map F(ΔC) relating the variation amount of capacitance ΔC of the sensor electrode unit to the PM concentration F in the exhaust pipe. It should be noted that this control map F(ΔC) uses data created based on the experimentation conducted in a state in which the temperature of the sensor electrode unit is within the stable electrode temperature range.

In Step S9, the sensor electrode unit is regenerated, and then the process returns to Step S2.

### Experimental Acquisition of Electrical Property

Hereinafter, the experimental acquisition of an electrical property of PM deposited on the sensor electrode unit will be explained.

FIG. 4 is a diagram illustrating the structure of the experimental apparatus 100.

In this experimental acquisition of the electrical property, an experimental sensor electrode unit 101 with PM filled between electrode plates 102, 102 was prepared, and then the resistance and the reactance of the experimental sensor electrode unit 101 were measured by the impedance measuring equipment 104 while this experimental sensor electrode unit 101 and PM were being heated in a furnace 103.

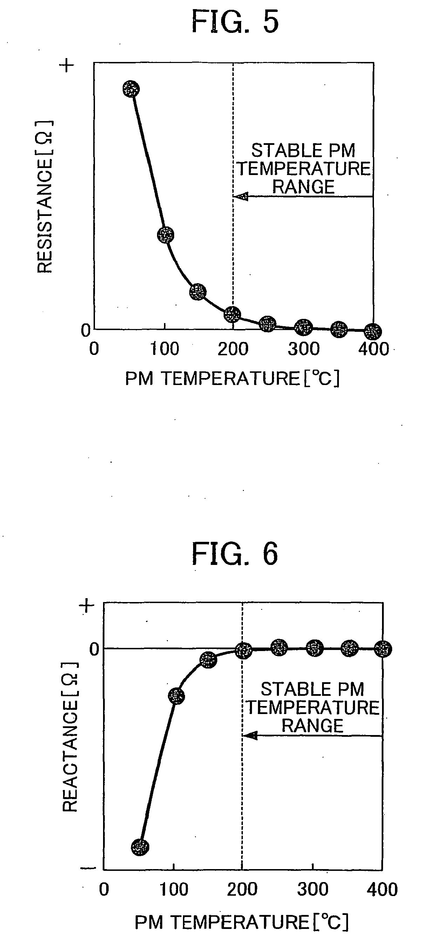

FIGs. 5 and 6 are diagrams illustrating the measurement results from the present experimentation, respectively. More specifically, FIG. 5 shows a resistance-temperature characteristic, and FIG. 6 shows a reactance-temperature characteristic. It should be noted that the PM temperature of these measured results on the horizontal axis represents a temperature obtained based on the relationship between the temperature rise profile of the furnace 103 and the temperature of PM, which were measured before the experimentation was conducted.

As shown in FIG. 5, resistance is a positive value and becomes smaller to converge to 0 asymptotically as the PM temperature increases. As shown in FIG. 6, reactance is a negative value and converges to 0 asymptotically as the PM temperature increases. As shown in FIGs. 5 and 6, the respective rates of change of the resistance and the reactance in relation to the change in temperature of PM become smaller as the temperature of PM increases. Thus, the electrical property of PM is stabilized as the temperature of PM increases. Therefore, the lower limit value T_{MIN} of the above-mentioned stable electrode temperature range (stable PM temperature range) is set to a temperature when it is determined that the electrical property of PM is stabilized. According to the present experimental result, the lower limit value T_{MIN} of this stable electrode temperature range (stable PM temperature range) is set to 200°C.

### Experimental Acquisition of Capacitance-Temperature Characteristic

Hereinafter, the experimental acquisition of the capacitance-temperature characteristic of the sensor electrode unit will be explained.

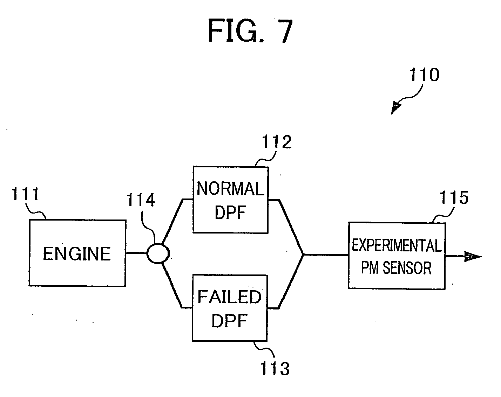

FIG. 7 is a diagram illustrating the structure of the experimental apparatus 110.

The experimental apparatus 110 is configured to include an engine 111, a normal DPF 112 and a failed DPF 113 provided downstream of this engine 111, a switching valve 114 that switches between the normal DPF 112 and the failed DPF 113 so as to direct exhaust gas emitted from the engine 111, and an experimental PM sensor 115 provided downstream of the normal DPF 112 and the failed DPF 113.

The normal DPF 112 is a filter collecting PM contained in exhaust gas emitted from the engine 111. Therefore, the PM concentration of exhaust gas downstream of the normal DPF 112 is nearly 0. The failed DPF 113 is an intentionally compromised normal DPF 112. Therefore, exhaust gas with a predetermined PM concentration flows to downstream of the failed DPF 113.

As the experimental PM sensor 115, a PM sensor was prepared similar to that in the above-mentioned embodiment, specifically a PM sensor in which heaters are provided in the sensor electrode unit that is capable of controlling the temperature of the sensor electrode unit.

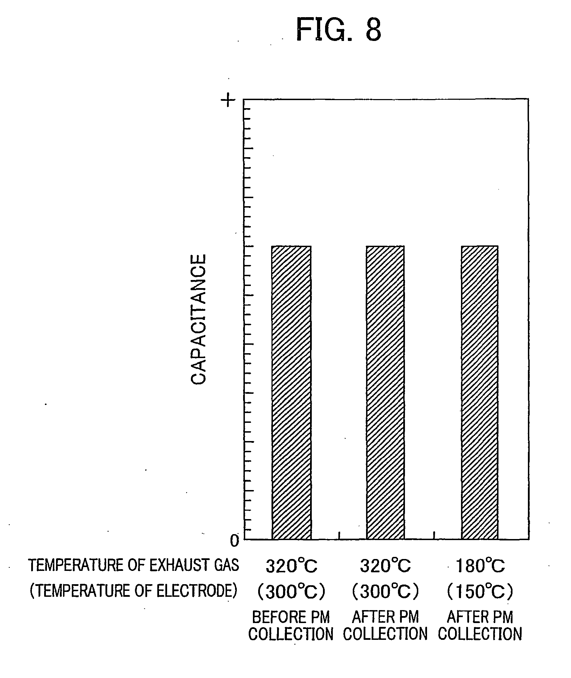

In the experimental acquisition of capacitance-temperature characteristic, three kinds of experiments (experiments 1 to 3) regarding the capacitance of the sensor electrode unit were conducted using the experimental apparatus 110 configured as described above. Hereinafter, these three kinds of experiments and the results thereof will be explained with reference to FIGs. 8 to 10.

FIG. 8 is a diagram illustrating the results of experiment 1.

In experiment 1, the switching valve 114 was switched to the normal DPF 112 side, PM was collected in the sensor electrode unit while exhaust gas emitted from the engine 111 flowed into the normal DPF 112, and then the capacitances before and after PM collection were measured. In this case, the temperature of exhaust gas flowing into the sensor electrode unit was adjusted to 320°C.

Thereafter, without regenerating the sensor electrode unit, the temperature of exhaust gas flowing into the sensor electrode unit was changed to 180°C, during which the capacitance of the sensor electrode unit was measured. It should be noted that the temperature of the sensor electrode unit was 300°C when the temperature of exhaust gas was 320°C, and the temperature of the sensor electrode unit was 150°C when the temperature of exhaust gas was 180°C.

In order from the left side in FIG. 8, the respective capacitance measurement values of the sensor electrode unit before PM collection (the exhaust gas temperature being 320°C), after PM collection (the exhaust gas temperature being 320°C), and after PM collection (the exhaust gas temperature being 180°C) are shown. It was confirmed that the capacitance measurement value of the sensor electrode unit was substantially equal under these three conditions, as shown in FIG. 8. Therefore, in a state in which no PM deposited on the sensor electrode unit, it was verified that the capacitance of the sensor electrode unit was constant regardless of the temperature of exhaust gas.

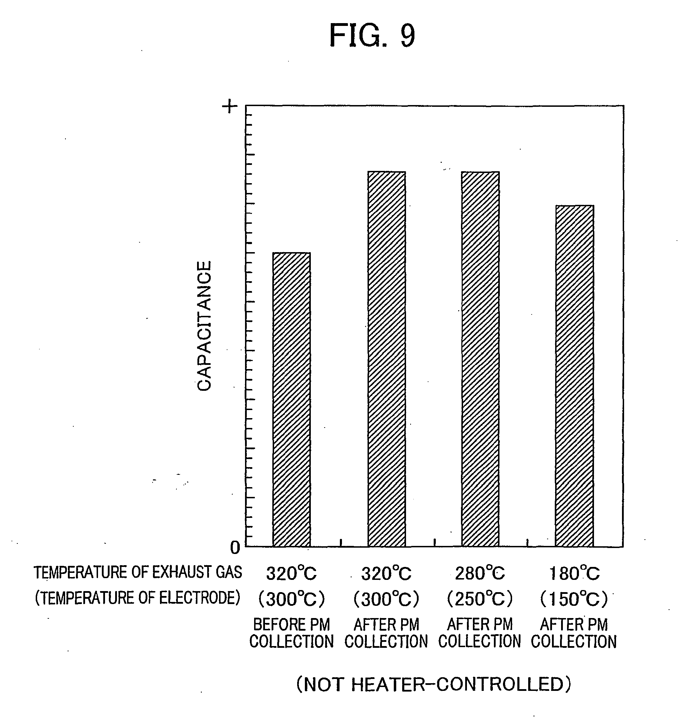

FIG. 9 is a diagram illustrating the result of experiment 2.

In experiment 2, the switching valve 114 was switched to the failed DPF 113 side, PM was collected in the sensor electrode unit while exhaust gas emitted from the engine 111 was flowed into the failed DPF 113, and then the capacitances before and after PM collection were measured. In this case, the temperature of exhaust gas flowing into the sensor electrode unit was adjusted to 320°C.

Next, without regenerating the sensor electrode unit, the switching valve 114 was switched to the normal DPF 112 side, and then exhaust gas emitted from the engine 111 was flowed into the normal DPF 112. Then, the temperature of exhaust gas flowing into the sensor electrode unit was changed step-wise to 280°C and 180°C, and the capacitance of the sensor electrode unit was measured at each of the temperatures. It should be noted that the temperature of the sensor electrode unit was 300°C when the temperature of exhaust gas was 320°C, the temperature of the sensor electrode unit was 250°C when the temperature of exhaust gas was 280°C, and the temperature of the sensor electrode unit was 150°C when the temperature of exhaust gas was 180°C.

In order from the left side in FIG. 9, the respective capacitance measurement values of the sensor electrode unit before PM collection (the exhaust gas temperature being 320°C), after PM collection (the exhaust gas temperature being 320°C), after PM collection (the exhaust gas temperature being 280°C), and after PM collection (the exhaust gas temperature being 180°C) are shown. As shown in FIG. 9, the capacitance of the sensor electrode unit increases when PM is collected in the sensor electrode unit. In addition, when the temperature of exhaust gas was changed from 320°C to 280°C, a substantial change in capacitance of the sensor electrode unit was not confirmed. However, when the temperature of exhaust gas was changed from 280°C to 180°C, it was confirmed that the capacitance of the sensor electrode unit became small.

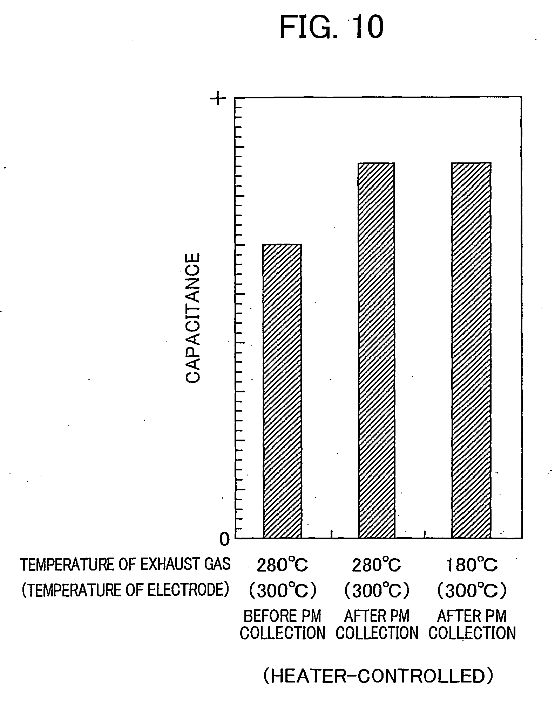

FIG. 10 is a diagram illustrating the results of experiment 3.

In experiment 3, the switching valve 114 was set to the failed DPF 113 side, PM was collected in the sensor electrode unit while exhaust gas emitted from the engine 111 was flowing into the failed DPF 113, and the capacitances before and after PM collection were measured. In this case, the temperature of exhaust gas flowing into the sensor electrode unit was adjusted to 280°C.

Thereafter, without regenerating the sensor electrode unit, the switching valve 114 was set to the normal DPF 112 side, and then the capacitance of the sensor electrode unit was measured while exhaust gas emitted from the engine 111 was flowing into the normal DPF 112. Thereafter, the temperature of exhaust gas flowing into the sensor electrode unit was adjusted to 180°C. Particularly in this experiment 3, the heaters were driven so that the temperature of the sensor electrode unit was maintained at 300°C.

In order from the left side in FIG. 10, the respective capacitance measurement values of the sensor electrode unit before PM collection (the exhaust gas temperature being 280°C), after PM collection (the exhaust gas temperature being 280°C), and after PM collection (the exhaust gas temperature being 180°C) are shown. As shown in FIG. 10, the capacitance of the sensor electrode unit increases after PM is collected in the sensor electrode unit. In addition, unlike the results shown in FIG. 9 as described above, it was verified that the capacitance measurement value of the sensor electrode unit was substantially constant by maintaining the temperature of the sensor electrode unit at 300°C, even if the temperature of exhaust gas was changed from 280°C to 180°C. Therefore, as in the above-mentioned embodiment, it was verified that the capacitance of the sensor electrode unit could be measured by measuring the capacitance of the sensor electrode unit in a state in which the temperature of the sensor electrode unit was controlled to within a stable electrode temperature range, regardless of the operating status of the engine 111 and the temperature of exhaust gas.

According to the present embodiment, the following effects can be attained.
(1) According to the present embodiment, the variation amount ΔC of capacitance of the sensor electrode unit 2 is measured in a state in which the temperature of PM deposited on the sensor electrode unit 2 is controlled to within a stable electrode temperature range in which the electrical property is stable. Thus, the variation amount ΔC of capacitance of the sensor electrode unit 2 can be stably measured regardless of the operating state of the engine and the temperature of the exhaust gas. Therefore, the PM concentration F in the exhaust gas can be stably measured regardless of the operating state of the engine and the PM concentration F of the exhaust gas.
(2) According to the present embodiment, the variation amount ΔC of capacitance of the sensor electrode unit 2 is measured in a state in which the temperature of PM deposited on the sensor electrode unit 2 is controlled to be equal to or more than 200°C. Thus, the variation amount ΔC of capacitance of the sensor electrode unit 2 can be measured while the electrical property of PM deposited on the sensor electrode unit 2 is more reliably stabilized. Therefore, the PM concentration F of particulate matter in the exhaust gas can be more stably detected.
(3) According to the present embodiment, the temperature of the electrode plate 25 of the sensor electrode unit 2 is detected as a parameter correlated with the temperature of PM deposited on the sensor electrode unit 2, and then the sensor electrode unit 2 is heated in accordance with the detected temperature of the electrode plate 25. Thus, the temperature of PM deposited on the sensor electrode unit 2 can be more reliably controlled in the stable PM temperature range. Therefore, the PM concentration F of particulate matter in the exhaust gas can be more stably detected.
(4) According to the present embodiment, it is determined whether or not the temperature T of the electrode plate 25 detected by the electrode temperature sensor 8 is within the stable electrode temperature range. In addition, in a case where it is determined that the temperature T of the electrode plate 25 is within the stable electrode temperature range, the sensor electrode unit 2 is not heated, and in a case where it is determined that the temperature T of the electrode plate 25 is not within the stable electrode temperature range, the sensor electrode unit 2 is heated. Thus, excess electric power consumption for heating the sensor electrode unit 2 can be more reliably suppressed while the temperature of PM deposited on the sensor electrode unit 2 is controlled to within the stable PM temperature range.
(5) According to the present embodiment, PM is caused to deposit on the sensor electrode unit 2 by applying a predetermined voltage to the sensor electrode unit 2, the variation amount ΔC of capacitance of the sensor electrode unit 2 is measured, and then the PM concentration in exhaust gas is detected in accordance with the variation amount ΔC of capacitance thus measured. In fact, since this PM sensor 1 needs to perform the following two steps: a step of causing PM to deposit on the sensor electrode unit 2 and a step of measuring the variation amount ΔC of capacitance of the sensor electrode unit 2, high accuracy detection is possible, but time is required to detect the PM concentration. Thus, as the operating state of the engine changes while performing the two steps, the temperature of PM deposited on the sensor electrode unit 2 changes, which may cause detection accuracy to be reduced as a result. Therefore, before measuring the variation amount ΔC of capacitance of the sensor electrode unit 2 as described above, controlling the temperature of PM deposited on this sensor electrode unit 2 to be within the stable PM temperature range is especially effective in the PM sensor 1 requiring time for such detection.

In the present embodiment, the electrode temperature sensor 8, the temperature control apparatus 5, and the ECU 6 configure the temperature control means, the ECU 6 configures the concentration detection means, the electrode temperature sensor 8, the temperature control apparatus 5, and the ECU 6 configure the parameter detection means, and the temperature control apparatus 5 and the ECU 6 configure the heating means. More specifically, the means involved in performing Steps S1 to S9 in FIG. 3 configure the concentration detection means, the means involved in performing Steps S2 to S4 in FIG. 3 configure the temperature control means, the means involved in performing Step S2 in FIG. 3 configure the parameter detection means, and the means involved in performing Steps S3 and S4 in FIG. 3 configure the heating means.

While preferred embodiments of the present invention have been described and illustrated above, it is to be understood that they are exemplary of the invention and are not to be considered to be limiting. Additions, omissions, substitutions, and other modifications can be made thereto without departing from the scope of the present invention. Accordingly, the invention is not to be considered to be limited by the foregoing description and is only limited by the scope of the appended claims.

In the above-mentioned embodiment, in Step S3, in a case where the sensor temperature is less than a predetermined lower limit value of temperature, the process proceeds to Step S4, and then the sensor electrode unit is heated over a predetermined time; however, the present invention is not limited thereto. For example, the sensor electrode unit may be heated until the temperature of the sensor exceeds the lower limit value of temperature, while monitoring the temperature of the sensor.

In addition, in the above-mentioned embodiment, the temperature of the electrode plate 25 is detected by the electrode temperature sensor 8 as a parameter correlated with PM deposited on the sensor electrode unit 2; however, the present invention is not limited thereto. The temperature of exhaust gas may be detected as a parameter correlated with PM deposited on the sensor electrode unit 2.

Furthermore, in the above-mentioned embodiment, the sensor electrode unit is heated by the heaters to allow the temperature of the sensor electrode unit to be within the stable temperature range only in a case where the temperature of the sensor electrode unit is not within the stable temperature range; however, the present invention is not limited thereto. For example, the temperature of the sensor electrode unit may be made to constantly meet a predetermined target temperature set to be within the stable temperature range. In this case, the target temperature may be set until the measurement of PM concentration is completed so that the temperature of the sensor electrode unit is within the stable temperature range.

A PM sensor capable of stably detecting a concentration regardless of the operating state of an engine and the temperature of exhaust gas is provided. The PM sensor has a sensor electrode unit provided in an exhaust gas path of the engine and detects the PM concentration in exhaust gas based on an electrical characteristic of the sensor electrode unit on which PM contained in exhaust gas deposits. The variation amount ΔC of capacitance of the sensor electrode unit is measured in a state in which the temperature of PM deposited on the sensor electrode unit is controlled to within a stable PM temperature range in which the electrical property is stable, and the PM concentration in exhaust gas is detected in accordance with the variation amount ΔC of capacitance thus measured.

## Claims

1. A particulate matter detection apparatus (1) that has an electrode unit (2) to be provided in an exhaust gas path (EP) of an internal combustion engine and that detects a concentration of particulate matter in exhaust gas based on an electrical characteristic of the electrode unit (2) on which the particulate matter contained in the exhaust gas deposits, the particulate matter detection apparatus (1) comprising:
temperature control means (5, 6, 8) for controlling a temperature of the particulate matter deposited on the electrode unit (2) to be within a stable temperature range in which an electrical property of the particulate matter is stable; and
concentration detection means (6), wherein
the particulate matter detection apparatus (1) further comprises:
impedance measuring equipment (4) measuring an electrical characteristic of the electrode unit (2); and **characterized by**
a change-over switch (SW) selectively switching connection of the electrode unit (2) between a particulate matter collection DC power supply (3) and the impedance measuring equipment (4)
the change-over switch (SW) causes the electrode unit (2) and the particulate matter collection DC power supply (3) to be connected with each other, and the concentration detection means (6) performs a sampling process in which the particulate matter contained in the exhaust gas is caused to deposit on the electrode unit (2) by applying a voltage,
subsequent to the sampling process the change-over switch (SW) causes the electrode unit (2) and the impedance measuring equipment (4) to be connected with each other, and the concentration detection means (6) performs a measurement process of measuring the electrical characteristic of the electrode unit (2) such that the concentration detection means (6) detects the concentration of the particulate matter in the exhaust gas in accordance with the electrical characteristic thus measured,

2. The particulate matter detection apparatus (1) according to claim 1, wherein the stable temperature range is equal to or more than 200°C.

3. The particulate matter detection apparatus (1) according to claim 1 or 2, wherein the temperature control means (5, 6, 8) includes:
a parameter detection means for detecting a parameter that has a correlation with the temperature of particulate matter deposited on the electrode unit (2); and
a heating means for heating the electrode unit (2) in accordance with the parameter detected by the parameter detection means.

4. The particulate matter detection apparatus (1) according to claim 3, wherein the heating means determines whether or not a parameter detected by the parameter detection means is within a stable parameter range set to correspond to the stable temperature range, based on the correlation, and does not heat the electrode unit (2) in a case where the parameter thus detected is determined to be within the stable parameter range, and heats the electrode unit (2) in a case where the parameter thus detected is not within the stable parameter range.

## Patentansprüche

1. Partikelmaterialerfassungsvorrichtung (1), die eine Elektrodeneinheit (2) zum Vorsehen in einem Abgasweg (EP) eines Verbrennungsmotors aufweist und die eine Konzentration von Partikelmaterial im Abgas basierend auf einer elektrischen Charakteristik der Elektrodeneinheit (2), auf der sich das im Abgas enthaltene Partikelmaterial ablagert, erfasst, wobei die Partikelmaterialerfassungsvorrichtung (1) umfasst:
ein Temperatursteuerungsmittel (5, 6, 8) zum Steuern/Regeln einer Temperatur des auf der Elektrodeneinheit (2) abgelagerten Partikelmaterials, so dass diese innerhalb eines stabilen Temperaturbereichs liegt, in der eine elektrische Eigenschaft des Partikelmaterials stabil ist; und
ein Konzentrationserfassungsmittel (6),
worin die Partikelmaterialerfassungsvorrichtung (1) ferner umfasst:
eine Impedanzmesseinrichtung (4), die eine elektrische Charakteristik der Elektrodeneinheit (2) misst; und **gekennzeichnet durch** einen Umschalter (SW), der selektiv eine Verbindung der Elektrodeneinheit (2) zwischen einer Partikelmaterialsammel-Gleichstromzufuhr (3) und der Impedanzmesseinrichtung (4) umschaltet,
wobei der Umschalter (SW) bewirkt, dass die Elektrodeneinheit (2) und die Partikelmaterialsammel-Gleichstromzufuhr (3) miteinander verbunden werden, und das Konzentrationserfassungsmittel (6) einen Sammelprozess durchführt, der **durch** Anlegen einer Spannung bewirkt, dass sich das im Abgas enthaltene Partikelmaterial auf der Elektrodeneinheit (2) ablagert,
wobei im Anschluss an den Sammelprozess der Umschalter (SW) bewirkt, dass die Elektrodeneinheit (2) und die Impedanzmesseinrichtung (4) miteinander verbunden werden, und das Konzentrationserfassungsmittel (6) einen Messprozess zum Messen der elektrischen Charakteristik der Elektrodeneinheit (2) durchführt, derart, dass das Konzentrationserfassungsmittel (6) die Konzentration des Partikelmaterials im Abgas gemäß der so gemessenen elektrischen Charakteristik erfasst.

2. Die Partikelmaterialerfassungsvorrichtung (1) nach Anspruch 1, worin der stabile Temperaturbereich gleich oder größer als 200°C ist.

3. Die Partikelmaterialerfassungsvorrichtung (1) nach Anspruch 1 oder 2, worin das Temperatursteuerungsmittel (5, 6, 8) enthält:
ein Parametererfassungsmittel zum Erfassen eines Parameters, der eine Korrelation mit der Temperatur des auf der Elektrodeneinheit (2) abgelagerten Partikelmaterials aufweist; und
ein Heizmittel zum Heizen der Elektrodeneinheit (2) gemäß dem vom Parametererfassungsmittel erfassten Parameter.

4. Die Partikelmaterialerfassungsvorrichtung (1) nach Anspruch 3, worin das Heizmittel bestimmt, ob ein vom Parametererfassungsmittel erfasster Parameter innerhalb eines stabilen Parameterbereichs liegt oder nicht, der entsprechend dem stabilen Temperaturbereich gesetzt ist, basierend auf der Korrelation, und die Elektrodeneinheit (2) in einem Fall nicht heizt, wo bestimmt wird, dass das so erfasste Parameter innerhalb des stabilen Parameterbereichs liegt, und die Elektrodeneinheit (2) in einem Fall heizt, wo der so erfasste Parameter nicht innerhalb des stabilen Parameterbereichs liegt.

## Revendications

1. Appareil de détection de matière particulaire (1) qui comporte une unité d'électrode (2) à disposer dans un trajet de gaz d'échappement (EP) d'un moteur à combustion interne et qui détecte une concentration de matière particulaire dans le gaz d'échappement d'après une caractéristique électrique de l'unité d'électrode (2) sur laquelle la matière particulaire contenue dans le gaz d'échappement se dépose, l'appareil de détection de matière particulaire (1) comprenant :
un moyen de régulation de température (5, 6, 8) permettant de réguler une température de la matière particulaire déposée sur l'unité d'électrode (2) dans une plage de température stable dans laquelle une propriété électrique de la matière particulaire est stable ; et
un moyen de détection de concentration (6),
dans lequel
l'appareil de détection de matière particulaire (1) comprend en outre :
un équipement de mesure d'impédance (4) mesurant une caractéristique électrique de l'unité d'électrode (2) ; et **caractérisé par**
un commutateur (SW) permutant sélectivement une connexion de l'unité d'électrode (2) entre une alimentation CC de collecte de matière particulaire (3) et l'équipement de mesure d'impédance (4),
le commutateur (SW) amène l'unité d'électrode (2) et l'alimentation CC de collecte de matière particulaire (3) à se connecter l'une à l'autre, et le moyen de détection de concentration (6) effectue un procédé d'échantillonnage dans lequel la matière particulaire contenue dans le gaz d'échappement est amenée à se déposer sur l'unité d'électrode (2) par application d'une tension,
à la suite du procédé d'échantillonnage, le commutateur SW amène l'unité d' électrode (2) et l'équipement de mesure d'impédance (4) à se connecter l'un à l'autre, et le moyen de détection de concentration (6) effectue un procédé de mesure consistant à mesurer la caractéristique électrique de l'unité d'électrode (2) de sorte que le moyen de détection de concentration (6) détecte la concentration de la matière particulaire dans le gaz d'échappement en conformité avec la caractéristique électrique ainsi mesurée.

2. Appareil de détection de matière particulaire (1) selon la revendication 1, dans lequel la plage de température stable est supérieure ou égale à 200 °C.

3. Appareil de détection de matière particulaire (1) selon la revendication 1 ou 2, dans lequel le moyen de régulation de température (5, 6, 8) inclut :
un moyen de détection de paramètre permettant de détecter un paramètre qui présente une corrélation avec la température de la matière particulaire déposée sur l'unité d'électrode (2) ; et
un moyen de chauffage permettant de chauffer l'unité d'électrode (2) en conformité avec le paramètre détecté par le moyen de détection de paramètre.

4. Appareil de détection de matière particulaire (1) selon la revendication 3, dans lequel le moyen de chauffage détermine si oui ou non un paramètre détecté par le moyen de détection de paramètre se trouve dans une plage de paramètre stable fixé pour correspondre à la plage de température stable, d'après la corrélation, et ne chauffe pas l'unité d'électrode (2) dans le cas où le paramètre ainsi détecté est déterminé comme se trouvant dans la plage de paramètre stable, et chauffe l'unité d'électrode (2) dans le cas où le paramètre ainsi détecté ne se trouve pas dans la plage de paramètre stable.
